# EUROPEAN PATENT SPECIFICATION

(11) **EP 0 873 445 B1**
(45) Date of publication and mention of the grant of the patent: **09.05.2001**
(21) Application number: 96917737.7
(22) Date of filing: 14.06.1996
(51) Int. Cl.: D06P 5/20, D06P 3/79, D06P 7/00, D01F 6/04

(54) **PROCESS FOR DYEING OF HIGHLY ORIENTED HIGHMOLECULAR-WEIGHT POLYETHYLENE MOULDED ARTICLES**
VERFAHREN ZUM FÄRBEN VON HOCHORIENTIERTEN FORMTEILEN AUS POLYETHYLEN MIT ULTRAHOHEM MOLEKULARGEWICHT
PROCEDE DE TEINTURE D'ARTICLES EN POLYETHYLENE FORTEMENT ORIENTE ET DE POIDS MOLECULAIRE ELEVE

(30) Priority: 16.06.1995 NL 1000581
(43) Date of publication of application: 28.10.1998
(73) Proprietor: DSM N.V., 6411 TE Heerlen (NL)
(72) Inventor: JACOBS, Martinus, Johannes, Nicolaas, NL-6416 EH Heerlen (NL); BACH, Elke, D-47798 Krefeld (DE); SCHOLLMEYER, Eckhard, D-47798 Krefeld (DE); CLEVE, Ernst, D-47798 Krefeld (DE)
(86) International application number: NL9600246
(87) International publication number: WO9700353

(56) References cited:
- EP-A- 0 009 765
- EP-A- 0 474 599
- EP-A- 0 474 600
- EP-A- 0 514 337
- EP-B- 0 222 207
- FR-A- 2 448 587
- JOURNAL OF THE TEXTILE INSTITUTE, vol. 84, no. 4, 1993, MANCHESTER GB, pages 534-552, XP000441291 D. KNITTEL, W.SAUS, E. SCHOLLMEYER: "Application of Supercritical Carbon Dioxide in Finishing Processes"
- TEXTILE RESEARCH JOURNAL, vol. 63, no. 3, 1 March 1993, pages 135-142, XP000360491 SAUS W ET AL: "DYEING OF TEXTILES IN SUPERCRITICAL CARBON DIOXIDE" cited in the application
- JOURNAL OF ORGANIC CHEMISTRY, vol. 49, no. 26, 1984, EASTON US, pages 5097-5101, XP002013507 JOHN A. HYATT: "Liquid and Supercritical Carbon Dioxide as Organic Solvents"
- DATABASE WPI Section Ch, Week 9248 Derwent Publications Ltd., London, GB; Class A17, AN 92-392413 XP002013508 & JP,A,04 289 213 ( TOYOBO KK) , 14 October 1992
- PATENT ABSTRACTS OF JAPAN vol. 017, no. 100 (C-1030), 26 February 1993 & JP,A,04 289212 (TOYOBO CO. LTD.), 14 October 1992,

## Description

The invention relates to a process according to claims 1, 13, 18 for the dyeing of a highly oriented moulded article substantially consisting of a polyethylene having a weight average molecular weight of at least 400 kg/mol. The invention also relates to the dyeing of articles containing such a moulded article.

A process of the same kind is described in JP-A-03.277.464. In the known process, highly oriented ultra-high molecular weight polyethylene fibres are contacted with a dye bath at a temperature of 100-130°C for 20-60 minutes, with the dye bath consisting of an aqueous dispersion of a finely ground mixture of specific dyes and surfactants whereupon the mould is washed and dried. For good dyeing results the fibres are preferably modified by means of a plasma or corona treatment prior to the dyeing operation.

An important drawback of the known process is that the dyed fibres, particularly if they are not first modified by means of a plasma or corona treatment, possess insufficient colour intensity and that the colour has insufficient resistance to rubbing and washing due to the dyes being located substantially at the surface of the fibres.

The object of the invention is to provide a process that exhibits the aforementioned drawbacks to a lesser degree.

This object is achieved by the invention in that the moulding is contacted, at a temperature of between 100 and 130°C, with a supercritical liquid in which a dye is dissolved.

It has been found that very good dyeing results can be achieved by using the process of the invention. The dyes are brought into the moulding to a greater depth so that they cannot be removed, or can be removed only with great difficulty, by washing with water, by rubbing or even by boiling in hexane. A further advantage of the process of the invention is that the process is less laborious because no elaborate washing step or drying step is needed after dyeing. Yet another advantage is that the mouldings are coloured more uniformly. It has specifically been found that good coloration occurs even in places that are difficult of access or inaccessible to dyes dispersed in water, such as those places where fibres are wound one over the other. This affords the highly attractive possibility of colouring fibre bobbins in their entirety.

As supercritical liquid the therefore known and suitable substances suitable for the purpose may be used, such as carbon dioxide, dinitrogen oxide, ammonia, ethane or propane. Preferably, the supercritical liquid is carbon dioxide inasmuch as this substance becomes supercritical at a relatively low temperature and pressure and is harmless to man and the environment.

The choice of dye is of great importance. The dye must on the one hand obviously be soluble in the supercritical liquid and on the other exhibit a good affinity to highly oriented high-molecular-weight polyethylene mouldings. Good affinity means that the dye, in supercritical dyeing, is well able to penetrate into the moulding, resulting in a high colour intensity and high resistance to rubbing and washing.

It has been found that dye molecules which are essentially plate-shaped exhibit a good affinity. The shape of the dye molecule is defined on the basis of a rectangular box, which box tightly envelopes the dye molecule, with the molecule having a configuration with minimum energy content (in vacuo). By the molecular length, width and depth is meant the length, width and depth of the enveloping box.

The configuration with minimum energy content in vacuo can be determined with the aid of the Biosym Software molecular modelling package (release 23.7). This package makes it possible to construct the molecule in a random, preferably as elongate a shape as possible, whereupon the molecule configuration is so adapted by an iterative process as to minimize the energy content. A CVFF force field is used and optimization is continued until a maximum energy gradient of 0.0001 Kcal/molÅ is obtained. If there are several configurations having a local minimum in energy content, the configuration having the lowest energy content is chosen.

The molecular length is the longest dimension of the (energy-minimized) molecule. In determining the dimension, only the distances between the atoms are measured and no account is taken of the radius of the atom. The molecular width is determined by determining in a projection of the molecule along the molecular longitudinal axis the longest dimension at a right angle to the longitudinal axis. The molecular depth is determined by determining the longest dimension in a projection of the molecule along the plane formed by the longitudinal and the latitudinal axis at a right angle to the plane.

It is preferred for plate-shaped dye molecules to be used in the process of the invention, which means that the molecular depth of the dye molecule is at most 0.5 nm. More preferably, the molecular depth is at most 0.4 nm, still more preferably at most 0.3 nm and most preferably at most 0.2 nm. A depth of 0.2 nm corresponds to a perfectly flat molecule. Preferably, the product of the molecular depth and the molecular width of the dye molecule is at most 0.4 nm², more preferably at most 0.3 nm².

Another criterion by which good dyes can be distinguished from inferior dyes is that all atoms in the dye molecule having an sp3 hybridization contain at most 2 substituents whose largest molecular dimension is greater than 0.5 nm.

Preferably, the dye also has a molecular weight of at most 1000 g/mol. On the one hand, at higher molecular weights the solubility in supercritical solvents, particularly in supercritical CO₂, deteriorates. On the other hand, the polyethylene moulded article's affinity to colouring is lower. Dyes having a molecular weight below 250 g/mol are readily absorbed by the polyethylene moulded article but can also be removed from the moulded article relatively easily. This problem can be resolved for instance by chemically fixing such dyes in the moulded article. Preferably, the molecular weight of the dye used in the process of the invention is at least 250 g/mol.

Good results are achieved if the dye is an azo compound with the formula Ar-N=N-Ar, where Ar is an aryl group, which may or may not be substituted. Aryl group is understood to be a benzyl or a naphthyl group in particular. Such azo compounds, on account of their rigid configuration, are plate-shaped and have good affinity to the polyethylene moulded article.

Suitable dyes are the said azo compounds in which an Ar is substituted in the para position with an (-NH-C(=O)-R) group in which R is an alkyl, aryl or hydrogen. The amide group forms a semi-rigid, plate-shaped configuration with the azo compound.

Particularly suitable dyes are azo compounds in which an Ar is substituted in the para position with an (-N=N-Ar) group in which Ar is an aryl group, which may or may not be substituted. Such diazo compounds, on account of their rigid configuration, are plate-shaped and have very good affinity to the polyethylene moulded article.

In the light of the plate shape of the dye molecule aimed at, the substituents in the ortho and meta positions of the aryl groups Ar of the azo and diazo compounds mentioned preferably have a greatest molecular dimension of at most 0.5 nm. Dye molecules having, for instance, an aryl group or a chain of more than 4 successive atoms (ignoring hydrogen atoms) as substituents in ortho and meta positions exhibit a lower affinity to the polyethylene moulded article. For obtaining high lightfastness it is preferred for the azo or diazo compounds not to have any amine substituents linked to the Ar groups. Lightfastness here means a colour's resistance to change on being irradiated with UV light as described in DIN 64004.

The dye must be soluble in the supercritical liquid at the specified conditions of temperature and pressure. If the solubility of the dye is inadequate, it may be improved by adding moderators to the supercritical liquid. Moderators are for example toluene, methylpyrrolidone, Decalin, glycols or propanol.

However, a drawback of adding moderators is that they may be left behind on or in the polyethylene moulded article on removing the supercritical liquid. This involves the risk of the moderators having an adverse effect on the properties of the moulded article. A further drawback is that the moderators are often toxic, flammable and/or explosive. As a result, the important advantage of supercritical carbon dioxide that the solvent can be vented into the atmosphere without any safety precautions is lost. Surprisingly, it has been found that dyes having a solubility in acteone of at least 0.2 g/l at room temperature are well soluble in supercritical carbon dioxide without the use of moderators. In the most-preferred process, the supercritical solvent is carbon dioxide and the dye has a solubility in acetone of at least 0.2 g/l at room temperature.

A general description of a process for incorporating additives, including dyes, in polymeric fibres with the aid of a supercritical liquid is given in EP-B-0222207. It states that the polymeric fibre must assume a swollen condition in order to be able to incorporate the additives in the fibre, the degree of swelling of the fibre being at least 2 vol.% and preferably 5 vol.%.
In the process of the invention the degree of swelling of the fibres during supercritical dyeing preferably is less than 1 vol.%. The degree of swelling is defined as the extent of the fibre's increase in volume on being contacted with a supercritical liquid. The advantage of this is that the strength of the fibre does not diminish unacceptably. A swelling degree of less than 1 vol.% is achieved by choosing a suitable supercritical liquid, for example CO₂, and a temperature below 130°C. The process described in EP-B-0.222.207, in which the degree of swelling is greater than 2 vol.% and preferably greater than 5 vol.%, cannot be applied because at a degree of swelling of 2 or 5 vol.%, if such a degree of swelling could occur at all, the fibres almost completely lose their strength. Generally speaking, fibres having a crystallinity higher than 80% and a tensile strength greater than 2.5 GPa swell by less than 1 vol.% on being contacted with a supercritical liquid.

Moulded article includes in particular fibres, monofilaments, multifilament yarns, staple fibre yarns, tapes, strips and films. The moulded article preferably is a fibre.

Highly oriented means that the moulded articles have been drawn so that the polymer chains run substantially completely parallel with the direction of drawing. It is preferred for the degree of orientation F to be at least 0.90, more preferably at least 0.95. The degree of orientation is defined by the formula F = (90° - H°/2)90°, where H⁰ is the width at half the height of the scattering intensity along the Debye ring of the strongest reflection on the equator. Moulded parts of highly oriented polyethylene have a high crystallinity of at least 70%, preferably of at least 80% and a tensile strength of at least 1,2 GPa and a tensile modulus of at least 40 GPa. Because of their high orientation and crystallinity, such moulded parts are not dyeable or are poorly dyeable by the processes known to date.

Ethylene homopolymer and copolymers of polyethylene and polypropylene are particularly suitable for use as polyethylene. The polyethylene used may also contain small amounts of one or more other polymers, particularly other alkene-1-polymers.

The moulded article is a highmolecular-weight linear polyethylene fibre preferably having a tensile strength of at least 1.2 GPa and a tensile modulus of at least 40 GPa. High-molecular weight means a molecular weight of at least 400,000 g/mol.

Linear polyethylene here means polyethylene with fewer than 1 side chain per 100 C atoms, preferably fewer than 1 side chain per 300 C atoms. Furthermore, the polyethylene may contain up to 5 mol.% of one or more other alkenes that can be copolymerized with it, such as propylene, butene, pentene, 4-methylpentene, octene.

Preferably, use is made of polyethylene fibres consisting of polyethylene filaments that have been prepared by a gel spinning process as described in for instance GB-A-2042414 and GB-A-2051667. Basically, this process comprises preparing a solution of a polyethylene having a high intrinsic viscosity, spinning the solution to filaments at a temperature above the dissolution temperature, cooling the filaments below the gelating temperature so that gelation takes place and drawing the filaments before, during or after removal of the solvent.

The shape of the cross section of the filaments can in that process be chosen by the choice of the shape of the spinning opening.

The preparation of a highly oriented polyethylene moulded article usually includes two or more drawing steps, often at progressively higher temperature and lower drawing rates.

In another embodiment of the process of the invention the moulded article is redrawn after dyeing. Surprisingly, it has been found that the colour intensity is enhanced by the drawing itself. A good enhancement of the colour intensity can in principle be achieved in a drawing operation that does not or does not substantially contribute to the strength or modulus, for example at most 20 or 10%. However, from a process engineering point of view it is advantageous to carry out the drawing operation such that the strength and modulus are also further improved. The manner in which this can be achieved is known to one skilled in the art. The presence of dyes has no adverse effect on the tensile strength and tensile modulus attainable by drawing. A further advantage of this embodiment even is that the dyed moulded articles obtained have a higher tensile strength and tensile modulus than moulded articles that are drawn under comparable conditions and are dyed afterwards.

In a preferred embodiment of the above process a solvent for polyethylene is applied to the moulded article prior to or during drawing. The advantage of this is that the colour intensity increases further. Preferably, this solvent is a nonvolatile substance such as paraffin oil. The advantage of this is that the solvent concentration remains virtually constant during drawing.

A good colour intensity can be obtained by drawing the dyed moulded article, whether or not in the presence of a solvent, even if the moulded article is ultrahighly oriented prior to drawing and/or if dyes are used that give too weak a colour intensity without these measures. Ultrahighly oriented moulded article here and hereafter means a moulded article having a tensile strength of at least 2.5 GPa, preferably at least 3 GPa and more preferably 3.5 GPa.

In another embodiment of the process the moulded article is a polyethylene fibre whose tensile strength prior to drawing is between 0.7 GPa and 2.5 GPa. More preferably, the tensile strength then is between 0.7 and 2 GPa, more preferably between 0.7 and 1.5 GPa. It has been found that, with this measure, a still higher colour intensity can be obtained. In this case, the moulded article is preferably drawn after dyeing to a strength of at least 2.5 GPa, preferably at least 3 GPa, still more preferably 3.5 GPa.

The tensile strength of the moulded article preferably is at least 0.7 GPa, because the moulded article needs to have a certain minimum strength so that it can be used under high pressure and temperature conditions.

The drawing may take place in a wide temperature range. At low temperatures, however, the drawing rate should be low in order to prevent premature breakage. If a higher drawing rate is to be obtained, the drawing temperature is preferably chosen within 10°C below the melting point of the moulded article and the drawing rate is below 1 sec⁻¹. For dyes with a low molecular weight, lower than, say, 300 g/mol or more particularly lower than 250 g/mol, the post-drawing temperature is preferably chosen so low that sublimation or sweating of the dye out of the fibre remains limited.

Surprisingly, it has been found that highly oriented polyethylene moulded articles, especially fibres, obtain a higher colour intensity if they undergo a mechanical operation prior to dyeing. Mechanical operation particularly means exposing the fibres to a flexural load in such a way that a component force acts on the fibre perpendicularly to the direction of the fibre. This situation arises when for instance a taut fibre is pulled through an eye at a certain bending angle. In an still better embodiment of the process of the invention the moulded article is therefore exposed to a flexural load prior to being dyed. The extent of loading, which is determined by the stress and the angle at which the stress is exerted, is the basis of the desired compromise between the colour intensity and an acceptable strength retention.

Since, almost without exception, a flexural load also occurs in the processing of a fibre to an article by, for instance, taslanization, crimping, twisting, doubling, weaving, knitting or braiding, the aforementioned advantages are also obtained when the polyolefinic moulded articles are dyed after they have been incorporated into an article.

The invention therefore also relates to a process for dyeing articles containing a highly oriented moulded article substantially consisting of a polyethylene having a weight average molecular weight of at least 400 kg/mol, characterized in that the moulded article is contacted, at a temperature of between 100 and 130°C, with a supercritical liquid in which a dye is dissolved. Some examples of such articles are blended yarns, combined yarns, knitted fabrics, woven fabrics, felts, ropes, fishing lines, sails, gloves and helmets.

The aforementioned preferred embodiments for the dyeing of a polyethylene moulded article are analogously applicable to the dyeing of articles containing such moulded articles.

In an embodiment of the aforementioned process that is particularly preferred the article, more specifically a rope or a fishing line, substantially consists of partially drawn polyethylene fibres having a tensile strength of at least 0.7 GPa and a tensile modulus of at least 7 GPa and the article is post-drawn after dyeing. Further advantages of the latter embodiment are that loss in strength caused by assembly of the article from the polyethylene fibres by for instance twisting, plying or braiding is offset in the post-drawing step so that the article has both a higher colour intensity and a much higher strength and dimensional stability.

The temperature in the process of the invention is from 100 to 130°C. Below 100°C, the solubility of the dyes in the supercritical liquid, especially in carbon dioxide, is too low. Above 130°C, excessive shrinkage and strength loss occurs in the polyethylene moulded parts. In order to alleviate strength losses it is preferred for the moulded articles to be dyed as they are taut. A suitable method of dyeing taut fibres is to tightly wind a number of layers of the fibres onto a bobbin and then to dye them.

The pressure is chosen in dependence on the liquid used. For supercritical carbon dioxide the pressure preferably is at least 20, more preferably at least 25 MPa. The solubility of the dyes is higher at such high pressures. After dyeing, the pressure preferably is reduced at a rate of at most 1.5 MPa per minute, more preferably at most 1 MPa per minute. If the pressure is reduced discontinuously, the pressure is reduced in each step preferably by not more than 1.5 MPa, preferably not more than 1 MPa, with the intervals between each step being long enough not to exceed the said highest rate of pressure reduction. It has been found that too rapid pressure reduction may lead to damage to the moulded article. Too rapid expansion may lead to significant strength loss especially in partially drawn polyethylene fibres with a low tensile strength (between 0.7 and 2 GPa).

The dyeing time is so chosen that the colour intensity is as high as possible. In general, no appreciable improvement in colour intensity is obtained after a dyeing time of 5 minutes, particularly after 10 minutes. The amount of dye weighed into the moulded article generally amounts to from 0.1 to 5 wt.% relative to the weight of the moulded article. Preferably, a somewhat larger amount of dye is added than the amount which is soluble in the supercritical liquid. Preferably, the solution is stirred in order to obtain good, homogeneous coloration.

Besides the dyes, other substances may optionally be added to the supercritical solvent; these include UV stabilizers for improving the light-fastness of the dyes or crosslinking reagents for improving the creep resistance and the oxystability of the polyethylene moulded articles.

Mixtures of the basic dyes yellow, blue and red may be used in a manner known in the art in order to obtain different colours.

A detailed process for supercritical dyeing is described in Text. Res. J. 63(3, 135-142 (1993).

The invention will now be illustrated by some examples.

The following polyethylene moulded articles were dyed:
A: High-drawn (HD) yarns consisting of linear polyethylene with an ultrahigh molecular weight, marketed with the tradename Dyneema SK60
B: Partially drawn (PD) yarns consisting of linear polyethylene with an ultrahigh molecular weight, obtainable with a strength of about 1 GPa and a modulus of 13 GPa.

The yarns were wound onto a perforated stainless steel cylinder and placed in an autoclave. The dyes were added on the bottom of the autoclave in the form of a powder. The apparatus was purged of air by means of carbon dioxide and was then heated. After the operating temperature was reached the carbon dioxide, while being stirred, was isothermically brought to the operating pressure. The pressure and the temperature were kept constant during the dyeing time. After the dyeing time the pressure was released at a rate of about 1 MPa per minute.

The amount of dye was 1% relative to the yarn weight, the pressure was 26 MPa, the temperature was 120°C and the dyeing time was 30 min.

The coloured fibres so obtained were visually assessed as to colour intensity. The table below gives the tradenames and the structural formulae of the dyes as well as an indication of the colour intensity ((P = poor, M = moderate, G = good, VG = very good) for both HD and PD yarns. The rating "poor" does not suggest that coloration did not occur or might not occur with further improvement measures as described above.

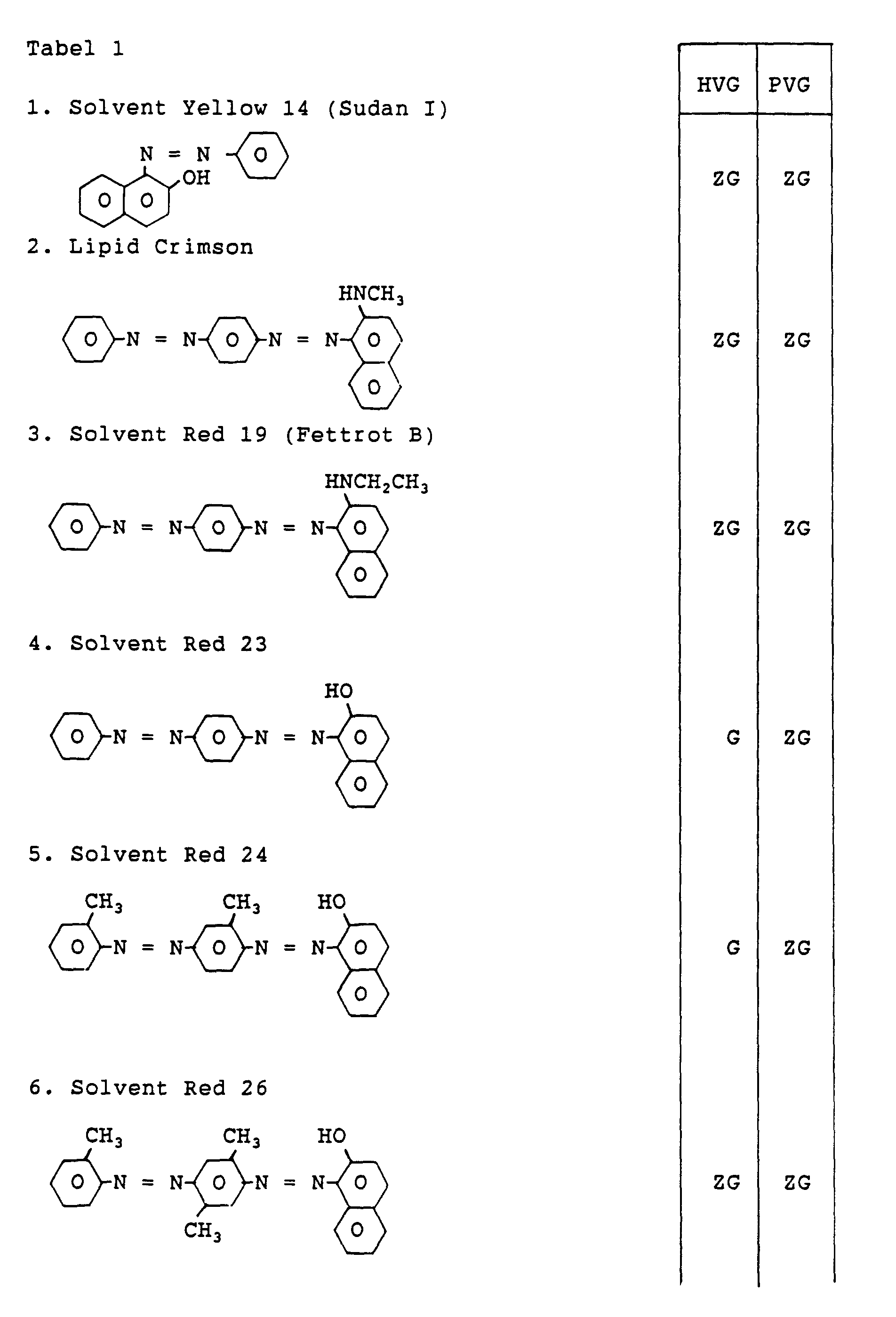

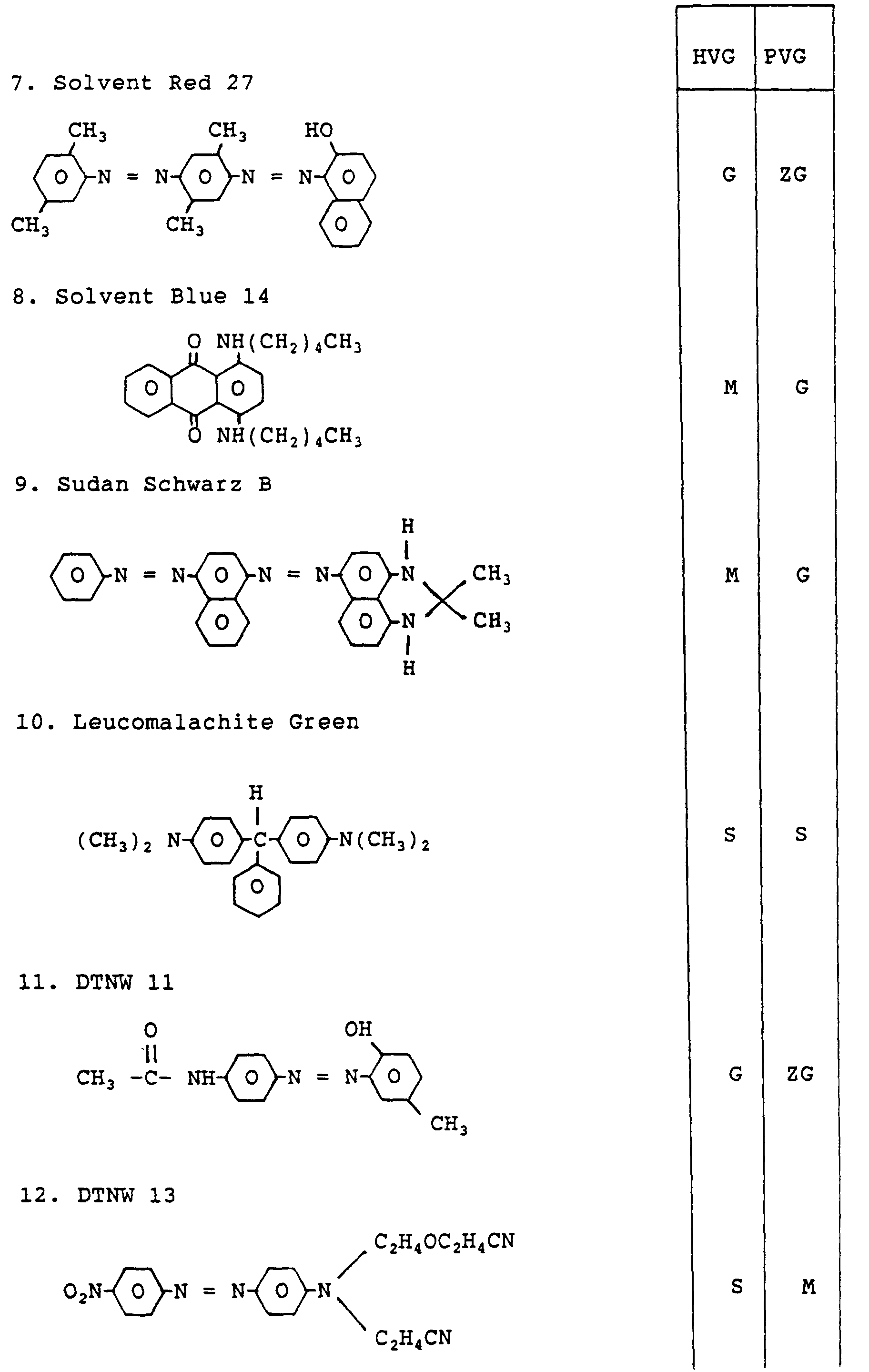

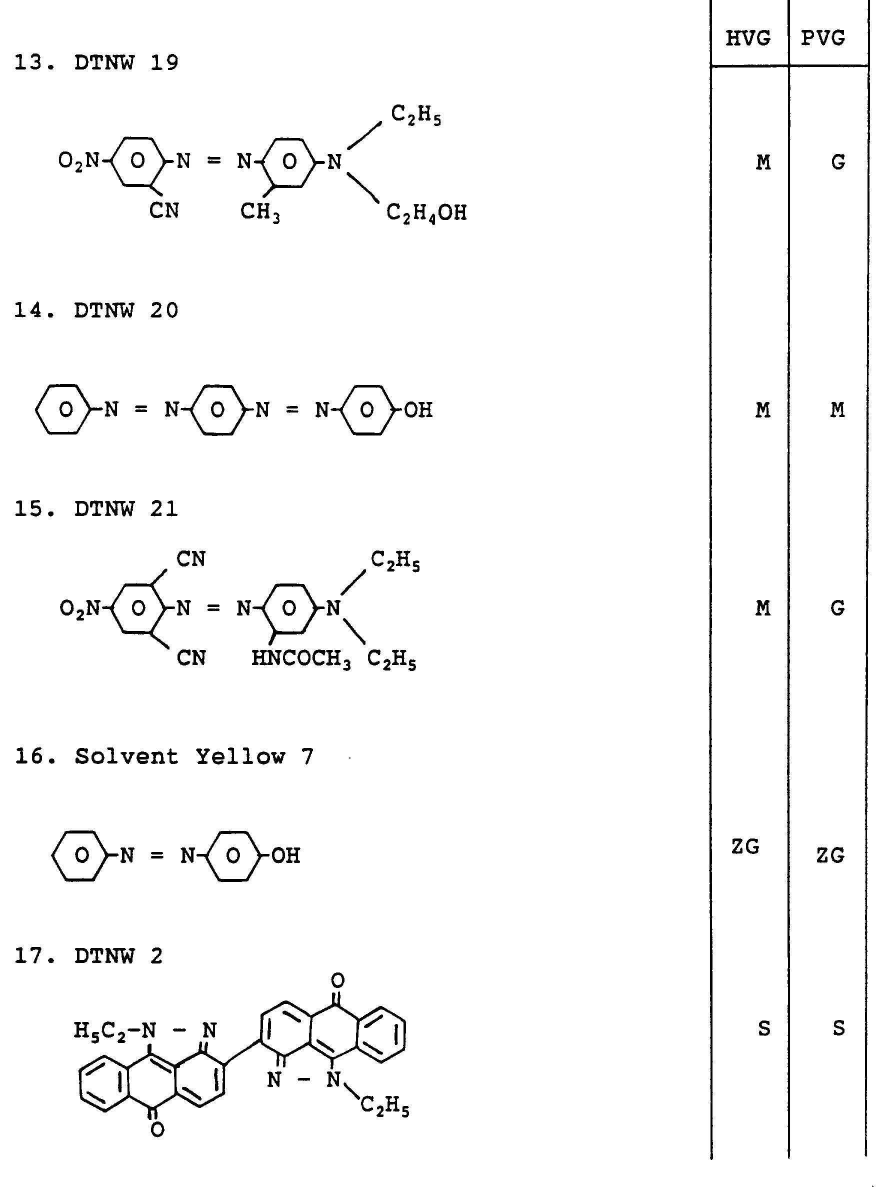

The molecular dimensions of some of the dyes included in Table 1 are given in Table 2. Figure 1 shows by way of illustration how the molecular dimensions of dye number 10 were determined.

| dye | L | B | D | A | INT (HD/PD) |
|---|---|---|---|---|---|
| 3 | 18.4 | 10.2 | 1.8 | 18.4 | VG/VG |
| 8 | 19.49 | 12.7 | 1.8 | 22.4 | M/G |
| 10 | 12.9 | 12.9 | 5.4 | 69 | P/P |
| 12 | 18.9 | 11.5 | 3.0 | 34.5 | P/M |
| 17 | 18.3 | 11.0 | 3.8 | 42 | P/P |

The table shows that molecules having too large a molecular depth exhibit poor affinity to the moulded article.

In all cases, the colour intensity of the PD yarns was higher than that of HD yarns. The dyed fibres obtained are all highly rubfast. Dyes 1 and 16, having a molecular weight of 248 and 200, respectively, give a very good colour intensity but, owing to their low molecular weight, present the drawback that they readily diffuse from the fibres. Washfastness was very good in all other cases. Dyes Nos. 10, 12 and 17 give poor or moderate colour intensity on account of their molecular depth being too large. Of dye 9 (Sudan black) only the blue component was absorbed well. The colour intensity indicators relate to blueing.

The azo compounds, especially dyes 3-7, also prove to have very good lightfastness in accordance with DIN 64004, the lightfastness of the PD years being the highest in all cases.
Dyes 3 to 7 had an acceptable lightfastness level of 2 or 3 for the HD yarns and a good lightfastness of 3 to 4 for the PD yarn. Dye 2 had a moderate to poor lightfastness of 1 for both HD and PD yarns. A good colour intensity and a surprisingly high lightfastness (4) were obtained with the dye CO₂-PES Blau (Ciba-Geigy) singly and in combination with dye 11 (green colour). The highest lightfastness (5) was obtained using a combination of CO₂-PES Blau (Ciba-Geigy) in combination with dye 11 (DTNW 11) and a Chimasorb 90 UV stabilizer.

Comparable experiments using dinitrogen oxide as supercritical solvent yielded comparable results in most cases. As an exception, it was found that in supercritical dinitrogen oxide a higher colour intensity (darker green) was obtained when dyeing with a mixture of dye 9 (blue) and 11 (yellow).

Braided fishing lines and knitted fabrics produced from HD yarns were dyed in the manner described above using several dyes mentioned in Table 1. The colour intensity of the yarns in the articles was higher than the colour intensity of HD yarns that had not undergone any treatment.

By way of Comparative Experiment HD and PD yarns were subjected to a dyeing treatment for 30 minutes using a solution of dye 4 in N-heptane and acetone at room temperature as well as at the boiling point of the solvent. In all cases, coloration was superficial and non-uniform. The dye could be removed almost completely from the fibres' surface by light rubbing and by washing with n-heptane and acetone at room temperature.

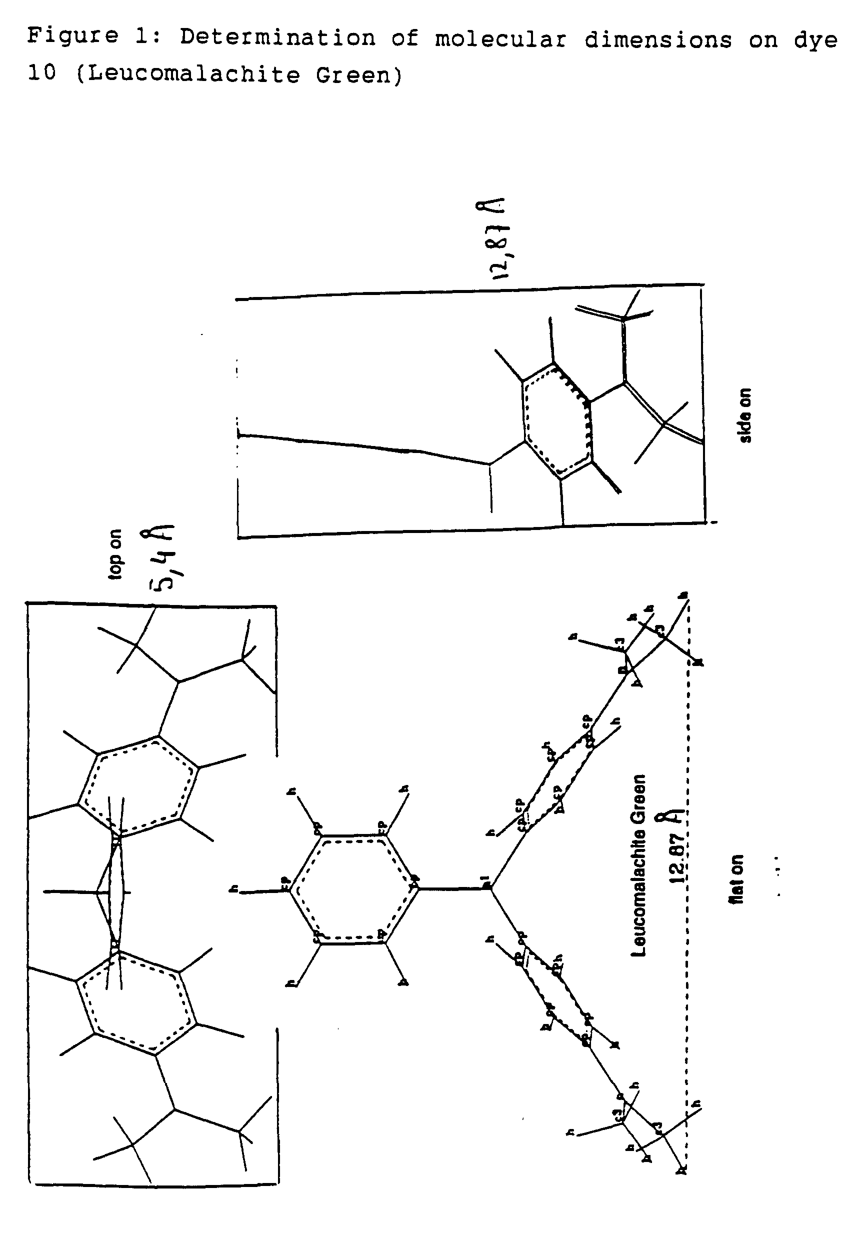

## Claims

1. Process for the dyeing of a highly oriented moulded article substantially consisting of a polyethylene having a weight average molecular weight of at least 400 kg/mol and having a crystallinity of at least 70%, characterized in that the moulded article is contacted, at a temperature of between 100 and 130°C, with a supercritical liquid in which a dye has been dissolved.

2. Process according to claim 1, characterized in that the supercritical licuid is carbon dioxide.

3. Process according to claim 1 or 2, characterized in that the molecular depth of the dye molecule is at most 0.5 nm.

4. Process according to any one of claims 1-3, characterized in that the product of the molecular depth and the molecular width of the dye molecule is at most 0.4 nm².

5. Process according to any one of claims 1-4, characterized in that the dye has a molecular weight of at most 1000 g/mol.

6. Process according to any one of claims 1-5, characterized in that the molecular weight of the dye is at least 250 g/mol.

7. Process according to any one of claims 1-6, characterized in that the dye is an azo compound according to the formula Ar-N=N=Ar, where Ar is an aryl group, which may or may not be substituted.

8. Process according to claim 7, characterized in that an Ar is substituted in the para position with an (-NH-C(=O)-R) group, in which R is an alkyl, aryl or hydrogen.

9. Process according to claim 7, characterized in that in the azo compound an Ar is substituted in the para position with an (-N=N-Ar) group, in which Ar is an aryl group, which may or may not be substituted.

10. Process according to any one of claims 7-9, characterized in that substituents in the ortho and meta positions of the aryl groups Ar of the azo and diazo compounds mentioned have a largest molecular dimension of at most 0.5 nm.

11. Process according to any one of claims 1-10, characterized in that the supercritical solvent is carbon dioxide and in that the dye has an acetone-solubility at room temperature of at least 0.2 g/l.

12. Process according to any one of claims 1-11, characterized in that the moulded article is a high-molecular-weight linear polyethylene fibre having a tensile strength of at least 1.2 GPa and a tensile modulus of at least 40 GPa.

13. Process for the manufacturing of a highly oriented, dyed moulded article substantially consisting of a polyethylene having a weight average molecular weight of at least 400 kg/mol, characterized in that a moulded article substantially consisting of a polyethylene having a weight average molecular weight of at least 400 kg/mol is contacted, at a temperature of between 100 and 130°C, with a supercritical liquid in which a dye has been dissolved and that the moulded article is drawn after dyeing.

14. Process according to claim 13, characterized in that a solvent for polyethylene is applied to the moulded article prior to or during drawing.

15. Process according to claim 13 or 14, characterized in that the moulded article is an ultrahighly oriented polyethylene fibre having a tensile strength of at least 2.5 GPa prior to drawing.

16. Process according to claim 13 or 14, characterized in that the moulded article is a polyethylene fibre whose tensile strength prior to drawing is between 0.7 and 2.5 GPa.

17. Process according to any one of claims 1-16, characterized in that the moulded article is subjected to a flexural load prior to dyeing.

18. Process for dyeing articles containing a highly oriented moulded article substantially consisting of a polyethylene having a weight-average molecular weight of at least 400 kg/mole, characterized in that the article, at a temperature between 100 and 130°C, is contacted with a supercritical liquid in which a dye is dissolved.

19. Process according to claim 18, characterized in that the article, in particular a rope or fishing line, substantially consists of partially drawn polyethylene fibres having a tensile strength of at least 0.7 GPa and a tensile modulus of at least 7 GPa and that the article is drawn further after dyeing.

## Patentansprüche

1. Verfahren zum Färben eines hochorientierten Formgegenstands, der im wesentlichen aus einem Polyethylen mit einem Gewichtsmittel des Molekulargewichts von mindestens 400 kg/mol und einer Kristallinität von mindestens 70% besteht, dadurch gekennzeichnet, daß der geformte Gegenstand bei einer Temperatur von zwischen 100 und 130°C mit einer superkritischen Flüssigkeit, worin ein Farbstoff gelöst worden ist, in Kontakt gebracht wird.

2. Verfahren nach Anspruch 1, dadurch gekennzeichnet, daß die superkritische Flüssigkeit Kohlendioxid ist.

3. Verfahren nach Anspruch 1 oder 2, dadurch gekennzeichnet, daß die Molekültiefe des Farbstoffmoleküls höchstens 0,5 nm beträgt.

4. Verfahren nach einem der Ansprüche 1 bis 3, dadurch gekennzeichnet, daß das Produkt der Molekültiefe und der Molekülbreite des Farbstoffmoleküls höchstens 0,4 nm² beträgt.

5. Verfahren nach einem der Ansprüche 1 bis 4, dadurch gekennzeichnet, daß der Farbstoff ein Molekulargewicht von höchstens 1000 g/mol aufweist.

6. Verfahren nach einem der Ansprüche 1 bis 5, dadurch gekennzeichnet, daß das Molekulargewicht des Farbstoffs mindestens 250 g/mol beträgt.

7. Verfahren nach einem der Ansprüche 1 bis 6, dadurch gekennzeichnet, daß der Farbstoff eine Azoverbindung gemäß der Formel Ar-N=N-Ar ist, worin der Rest Ar ein Arylrest ist, der substituiert oder unsubstituiert sein kann.

8. Verfahren nach Anspruch 7, dadurch gekennzeichnet, daß der Rest Ar in der para-Stellung mit einer (-NH-C(=O)-R)-Gruppe substituiert ist, worin der Rest R Alkyl, Aryl oder Wasserstoff ist.

9. Verfahren nach Anspruch 7, dadurch gekennzeichnet, daß in der Azoverbindung ein Rest Ar in der para-Stellung mit einer (-N=N-Ar)-Gruppe substituiert ist, worin Ar ein Arylrest ist, der substituiert oder unsubstituiert sein kann.

10. Verfahren nach einem der Ansprüche 7 bis 9, dadurch gekennzeichnet, daß die Substituenten in der ortho- und meta-Stellung der Arylreste Ar der angeführten Azo- und Diazo-Verbindungen eine größtmögliche Moleküldimension von höchstens 0,5 nm aufweisen.

11. Verfahren nach einem der Ansprüche 1 bis 10, dadurch gekennzeichnet, daß das superkritische Lösungsmittel Kohlendioxid ist und daß der Farbstoff eine Löslichkeit in Aceton bei Raumtemperatur von mindestens 0,2 g/l aufweist.

12. Verfahren nach einem der Ansprüche 1 bis 11, dadurch gekennzeichnet, daß der Formgegenstand eine lineare Polyethylenfaser mit hohem Molekulargewicht ist, die eine Zugfestigkeit von mindestens 1,2 GPa und ein Zugmodul von mindestens 40 GPa aufweist.

13. Verfahren zur Herstellung eines hochorientierten, gefärbten Formgegenstands, der im wesentlichen aus einem Polyethylen mit einem Gewichtsmittel des Molekulargewichts von mindestens 400 kg/mol besteht, dadurch gekennzeichnet, daß ein Formgegenstand im wesentlichen aus einem Polyethylen mit einem Gewichtsmittel des Molekulargewichts von mindestens 400 kg/mol besteht, bei einer Temperatur zwischen 100 und 130°C mit einer superkritischen Flüssigkeit, in welcher ein Farbstoff gelöst worden ist, in Kontakt gebracht wird und der Formgegenstand nach dem Färben gezogen wird.

14. Verfahren nach Anspruch 13, dadurch gekennzeichnet, daß ein Lösungsmittel für Polyethylen auf den Formgegenstand vor oder während des Ziehens aufgebracht wird.

15. Verfahren nach Anspruch 13 oder 14, dadurch gekennzeichnet, daß der Formgegenstand eine ultrahochorientierte Polyethylenfaser mit einer Zugfestigkeit von mindestens 2,5 GPa vor dem Ziehen ist.

16. Verfahren nach Anspruch 13 oder 14, dadurch gekennzeichnet, daß der Formgegenstand eine Polyethylenfaser ist, deren Zugfestigkeit vor dem Ziehen zwischen 0,7 und 2,5 GPa liegt.

17. Verfahren nach einem der Ansprüche 1 bis 16, dadurch gekennzeichnet, daß der Formgegenstand vor dem Färben einer Biegebelastung unterworfen wird.

18. Verfahren zum Färben von Gegenständen, die einen hochorientierten Formgegenstand enthalten, der im wesentlichen aus einem Polyethylen mit einem Gewichtsmittel des Molekulargewichts von mindestens 400 kg/mol besteht, dadurch gekennzeichnet, daß der Gegenstand bei einer Temperatur zwischen 100 und 130°C mit einer superkritischen Flüssigkeit, in welcher ein Farbstoff gelöst ist, in Kontakt gebracht wird.

19. Verfahren nach Anspruch 18, dadurch gekennzeichnet, daß der Gegenstand, insbesondere ein Seil oder eine Angelschnur, im wesentlichen aus teilweise gezogenen Polyethylenfasern mit einer Zugfestigkeit von mindestens 0,7 GPa und einem Zugmodul von mindestens 7 GPa besteht und daß der Gegenstand nach dem Färben weiter gezogen wird.

## Revendications

1. Procédé pour la teinture d'un article moulé hautement orienté constitué essentiellement d'un polyéthylène ayant une masse moléculaire moyenne en poids d'au moins 400 kg/mole et ayant une cristallinité d'au moins 70%, caractérisé en ce que l'on met l'article moulé en contact, à une température comprise entre 100 et 130°C, avec un liquide supercritique dans lequel on a dissout un colorant.

2. Procédé selon la revendication 1, caractérisé en ce que le liquide supercritique est du dioxyde de carbone.

3. Procédé selon la revendication 1 ou 2, caractérisé en ce que la profondeur moléculaire de la molécule de colorant est d'au plus 0,5 nm.

4. Procédé selon l'une quelconque des revendications 1 à 3, caractérisé en ce que le produit de la profondeur moléculaire et de la largeur moléculaire de la molécule de colorant est d'au plus 0,4 nm².

5. Procédé selon l'une quelconque des revendications 1 à 4, caractérisé en ce que le colorant possède une masse moléculaire d'au plus 1000 g/mole.

6. Procédé selon l'une quelconque des revendications 1 à 5, caractérisé en ce que la masse moléculaire du colorant est d'au moins 250 g/mole.

7. Procédé selon l'une quelconque des revendications 1 à 6, caractérisé en ce que le colorant est un composé azoïque selon la formule Ar-N=N=Ar, dans laquelle Ar est un groupe aryle, qui peut être ou peut ne pas être substitué.

8. Procédé selon la revendication 7, caractérisé en ce qu'un Ar est substitué dans la position para avec un groupe (-NH-C(=O)-R), dans lequel R est un groupe alkyle, aryle ou un atome d'hydrogène.

9. Procédé selon la revendication 7, caractérisé en ce que dans le composé azoïque, un Ar est substitué dans la para position avec un groupe (-N=N-Ar), dans lequel Ar est un groupe aryle qui peut être ou peut ne pas être substitué.

10. Procédé selon l'une quelconque des revendications 7 à 9, caractérisé en ce que les substituants dans les positions ortho et méta des groupes aryle Ar des composés azoïques et diazoïques mentionnés possèdent une plus grande dimension moléculaire d'au plus 0,5 nm.

11. Procédé selon l'une quelconque des revendications 1 à 10, caractérisé en ce que le solvant supercritique est du dioxyde de carbone et en ce que le colorant possède une solubilité dans l'acétone à la température ambiante d'au moins 0,2 g/l.

12. Procédé selon l'une quelconque des revendications 1 à 11, caractérisé en ce que l'article moulé est une fibre polyéthylène linéaire de masse moléculaire élevée ayant une résistance à la traction d'au moins 1,2 GPa et un module de traction d'au moins 40-GPa.

13. Procédé pour la fabrication d'un article moulé teint, hautement orienté constitué essentiellement d'un polyéthylène ayant une masse moléculaire moyenne en poids d'au moins 400 kg/mole, caractérisé en ce que l'on met en contact un article moulé constitué essentiellement d'un polyéthylène ayant une masse moléculaire moyenne en poids d'au moins 400 kg/mole, à une température comprise entre 100°Cet 130°C, avec un liquide supercritique dans lequel on a dissout un colorant et que l'on étire l'article moulé après teinture.

14. Procédé selon la revendication 13, caractérisé en ce que l'on applique un solvant pour polyéthylène à l'article moulé avant ou pendant l'étirage.

15. Procédé selon la revendication 13 ou 14, caractérisé en ce que l'article moulé est une fibre polyéthylène très hautement orientée ayant une résistance à la traction d'au moins 2,5 GPa avant l'étirage.

16. Procédé selon la revendication 13 ou 14, caractérisé en ce que l'article moulé est une fibre de polyéthylène dont la résistance à la traction avant l'étirage est comprise entre 0,7 et 2,5 GPa.

17. Procédé selon l'une quelconque des revendications 1 à 16, caractérisé en ce que l'on soumet l'article moulé à une charge de flexion avant la teinture.

18. Procédé pour teindre des articles contenant un article moulé hautement orienté constitué essentiellement d'un polyéthylène ayant une masse moléculaire moyenne en poids d'au moins 400 kg/mole, caractérisé en ce que l'on met en contact l'article, à une température comprise entre 100°C et 130°C, avec un liquide supercritique dans lequel on a dissout un colorant.

19. Procédé selon la revendication 18, caractérisé en ce que l'article, en particulier un cordage ou une ligne de pêche, est constitué essentiellement de fibres polyéthylène partiellement étirées ayant une résistance à la traction d'au moins 0,7 GPa et un module de traction d'au moins 7 GPa et que l'article est à nouveau étiré après teinture.
